# EUROPEAN PATENT APPLICATION

(11) **EP 2 189 654 A1**
(43) Date of publication of application: **26.05.2010**
(21) Application number: 08794058.1
(22) Date of filing: 07.07.2008
(51) Int. Cl.: F03D 1/04

(54) **WIND-DRIVEN POWERPLANT**

(30) Priority: 20.08.2007 RU 2007131487
(71) Applicant: Arter Technology Limited, Guernsey GY1 4EW (GB)
(72) Inventor: OVCHINNIKOV, Alexandr Ivanovich, Bologoe Tverskaya obl. 171070 (RU)
(74) Representative: Djukic, Dusan
(86) International application number: PCT/RU2008/000441
(87) International publication number: WO 2009/025580

(57) **Abstract**

Wind-driven electric plant

Concept of invention: a wind-driven electric plant comprises an inlet shell shaped as a circle and a circular outer shell with the cross section of its inside surface of a round form. Inside the circular shell, provision is made of a coaxially arranged turbine. Kinematically coupled with the turbine is a mechanism for the conversion of mechanical energy. At least a portion of the outer shell is ellipsoidal in cross section. The major axis of an ellipse defining the cross section of the outside surface of the inlet shell at an inlet of the latter is not less than 0.55 and not more than 0.95 of the dia. of a circle defining the inside surface of the outer shell in its minimum section. 3 claims, dependent, 3 ill.

## Description

The invention relates to power engineering, specifically wind-driven electric plants for the conversion of wind energy into electric or any other energy and can be used in the industry, agriculture and other branches of the economy.

Known is a wind-driven electric plant comprising an annular inlet shell, a turbine arranged in a coaxial relation within the inlet shell and a mechanism kinematically coupled with the turbine to convert mechanical energy (cf. patent US No 4218 175, cl. F03D 1/04, published 19.08.1980).

The known plant is disadvantageous in nonuniform effects an air flow produces on turbine blades, which fact causes variable g-loads leading to instability of electric current parameters generated by a mechanism for converting mechanical energy and also a relatively low efficiency of the plant because of the incomplete utilization of the energy of the air flow.
The closest as to technical essence and attainable technical result is a wind-driven electric plant including an annular inlet shell, a turbine coaxially arranged within the inlet shell, a mechanism kinematically coupled with the turbine to convert mechanical energy and an outer shell having a cross section of its circular inside surface (cf. patent RF No 2261362, cl. F03D 1/04. published 10.02.2005).

A construction of the known plant partially removes the defects of a wind-driven electric plant as described hereinabove on account of mounting a circular outer shell performing the functions of an ejector, which increases the speed of an air flow on a turbine and, consequently, raising the efficiency of the wind-driven electric plant. The defects of the known device selected as a most pertinent prior art solution can be a relatively low reliability of its operation. As is known, the wind-driven electric plant performs well in a specified range of speeds of the air flow. With the speed of the air flow (gusts of wind) increased above a calculated range, there is accordingly increased the energy of the air flow entering an inlet shell and also a discharge built up by the outer shell, which fact will give rise to an increased speed of rotation of the turbine above the computed value. The increase of the speed of rotation of said turbine will result in the increased velocity of a mechanism kinematically coupled therewith to convert mechanical energy. Thus, said elements of the construction of the device will work under increased loads, which will lower reliability of operation of the device as a whole. Be it noted that variable g-loads appearing with the increased speed of the air flow in excess of the design range will result in instability of energy parameters (electric current, for example) provided by the mechanical energy conversion mechanism.

The invention is directed to tackling a task of creating a wind-driven electric plant for ensuring its reliable operation and maintaining stability of the parameters of the energy produced by way of protecting a device from a sharp increase of the speed an air flow by automatically regulating an amount of energy delivered to a turbine. The technical result attainable in realization of the invention consists in stabilizing the speed of rotation of the turbine owing to reducing the degree of discharging past the turbine, with the speed of the air flow increased above the computed value.

The task set is solved owing to the fact that in a wind-driven electric plant comprising a circular inlet shell, a turbine coaxially arranged within the inlet shell, a mechanism kinematically coupled with the turbine to convert mechanical energy and a circular outer shell with a cross section of its circular inside surface, at least part of an outside surface of the inlet shell is shaped in cross section as an ellipse, and the major axis of the ellipse defining the cross section of the outside surface of the inlet shell at an inlet of the latter is not less than 0.55 and not more than 0.95 of the dia. of a circle defining the inside surface of the outer shell in a minimum section thereof.

Besides, the task set is solved owing to the fact that at least part of an outside surface of an outer shell is defined by a lateral surface of a cylinder of revolution.

More, the task set is solved owing to the fact that at least part of an inside surface of an inlet shell and/or outer shell is defined by the lateral surface of a cone of revolution.

Also, the task set is solved owing to the fact that at least part of an inside surface of an inlet shell and/or outer shell is defined by the lateral surface of a cylinder of revolution.

The invention will now be described in detail with reference to the drawings illustrating a specific embodiment thereof, in which Fig. 1 shows a wind-driven electric plant; Fig. 2 - view along arrow A in Fig. 1; Fig. 3 - alternative structural embodiment of a wind-driven electric plant.

A wind-driven electric plant comprises a circular inlet shell I being streamlined in cross section, in the form of a wing, for example. Inside the inlet shell I at least one turbine 2 is disposed in a coaxial relation, i.e. the longitudinally extending axis of symmetry of the turbine 2 is arranged on a longitudinal axis 3 of symmetry of the inlet shell I. A cowl 4 can be positioned upstream of the turbine 2 and securely fastened by means of cantilivers (not shown) on the inlet shell I. The turbine 2 is kinematically coupled with a mechanism 5 for mechanical energy conversion and can be installed on a support (not shown) in the form of a column, for example, to be securely fastened on the ground or a base to be fixed on a vehicle. The turbine 2 can be pivotally connected with the support to turn an apparatus downwind in any direction. The mechanical energy conversion mechanism 5 can be configured and designed as an electric current generator, a hydraulic pump or compressor. The kinematic coupling of the turbine 2 with said mechanism 5 can be executed, for example, as a belt drive, a propeller shaft or gear transmission. The mechanism 5 can be disposed in a central body 6. The inlet shell I by means of cantilivers 7, for example, is connected with an outer shell 8 shaped as a ring and the cross section of its inside surface 9 is a circle. The outer shell 8 in cross section can be streamlined, shaped as a wing, for example, and coaxially arranged with the inlet shell I, i.e. the longitudinal axis of symmetry 3 of the inlet shell I is the longitudinal axis of symmetry for the outer shell. The apparatus can be implemented with a wind vane surface on the outer shell 8 or central body 6 (not shown) to facilitate orientation of the plant downwind. At least a portion of an outside surface 10 of the inlet shell I is shaped as ellipse in cross section (Fig 2). Mind you - the following condition is to be observed: a major axis B of the ellipse defining the cross section of the outside surface 10 of the inlet shell I at an inlet thereof is not less than 0.55 and not more than 0.95 of the dia. D of a circumference defining the cross section of the inside surface 9 of the outer shell 8 in its minimum section, i.e. 0.55 D ≤ B ≤ 0.95 D. Said ratio between the geometric parameters of the apparatus has been obtained experimentally on an aerodynamic stand. An upper limit of said range of ratios between the geometric parameters of the apparatus specifies a relationship between a length B of the major axis of the ellipse defining the cross section of the outside surface 10 of the inlet shell I at an inlet of the latter and the dia. D of the circumference defining the cross section of the inside surface 9 of the outer shell 8 at an inlet of the latter, with the proviso that a maximum excess of the speed of an air flow of its computer value is about 25%. With the aforesaid ratio (B/D) of the geometric parameters departing from the upper value of said range, the inlet shell 1 creates a local resistance to an air flow at the inlet of the outer shell 8, on account of the ellipsoidal shape of the outside surface 10, in the inlet section thereof which adversely affects the operation of the plant and lowers the efficiency of the wind-driven electric plant with the rated speeds of the air flow. A lower limit of said range of relationships between the geometric parameters of the apparatus specifies the ratio of the length B of the major axis of the ellipse defining the cross section of the outside surface 10 of the inlet shell I at an inlet of the latter and the dia. D of a circumference defining the cross section of the inside surface 9 of the outer shell 8 at an inlet of the latter, with the proviso that the maximum excess of the speed of the air flow of its computed value is about 200%. With the said ratio B/D of geometric parameters of the apparatus departing from the limits of the lower value of said range, the inlet shell I does not essentially create a local resistance to the air flow at the inlet of the outer shell 8, owing to the ellipsoidal shape of the outside surface 10, and, consequently, the speed of rotation of the turbine is not reduced because of a drop in discharging downstream of the turbine. The concrete value of ratio (B/D) of geometric parameters of the apparatus from the range of its values, as claimed, is selected with due regard for statistic data on the speeds of the air flow in the given region, geometric characteristics of the plant and other parameters.

One of the variants of the structural embodiment of a wind-driven electric plant provides for at least a portion of an outside surface 11 (Fig. 2) of the outer shell 8 being formed by the lateral surface of a cylinder of revolution.

Another variant of the structural embodiment of an apparatus provides for at least a portion of an inside surface 12 of the inlet shell I and/or at least the inside surface 9 of the outer shell 8 being formed by the lateral surface of a cone of revolution.

At least a portion of an inside surface 15 of the inlet shell 1 and/or at least a portion of the inside surface 9 (not shown) of the outer shell 8 and/or at least a portion of the inside surface 12 of the inlet shell I can be formed by the lateral surface of a cylinder of revolution.

A wind-driven electric plant is operated in the following manner.

An air flow moving along the longitudinal axis of symmetry 3 of a plant oriented downwind with the aid of a wind vane surface strikes the turbine 2 via the inlet shell I thereby to make it rotate. Inasmuch as the turbine 2 is kinematically coupled with the mechanical energy conversion mechanism 5, then the latter also starts working to convert said air flow energy into a kind of energy as required. At the same time, the air flow moves along the surface of the outer shell 8 to create a discharge by ejection in rear part of the plant downstream of the turbine 2. The air flow reaches a maximum speed when acted upon by two energy fluxes from the side of the inlet section of the inlet shell I and from the side of the outlet section of the outer shell 8, which fact facilitates energy take-off from the air flow.

Be it noted that the inlet section of the outer shell 8 is shaped as a ring, with its width diminishing on two symmetrically arrenged parts. The reduced width of the inlet section of the outer shell 8 on the aforesaid parts is necessitated by the ellipsoidal shape of the inlet section of the inlet shell I, and a length B of the major axis of an ellipse defining the cross section of the outside surface 10 of the inlet shell I at an inlet of the latter and, consequently, a degree of reduction of the inlet section of the outer shell 8 being selected such that with the rated speed of an air flow, the reduction of the width of the inlet section of the outer shell 8 does not produce effects on the efficacy of the air flow involved in creating a discharge, i.e. a wind-driven electric plant will perform in the operating conditions of a maximum energy take-off of the air flow.

With the speed of an air flow rising above a computed value (strong gusts of wind), the quantity of an energy flux coming to the turbine 2 via the inlet shell I is increased. And the quantity of a second energy flux entering from the side of the outlet section of the outer shell 8 will decline. Said reduction of the efficiency of the air flow involved in creating a discharge is caused by the fact that with the increased speed of the air flow coming into the outer shell 8 above a computed value, every reduction of area of the inlet section of the outer shell 8 performs the functions of a local resistance which lowers the rate of passage of the air flow via the outer shell 8, said reduced rate of passage of said air flow via the outer shell 8 lowers the efficiency of effects said flow produces on creation of the discharge. Thus, as the speed of the air flow is increased above the computed value, the energy flux is simultaneously increased that is admitted to the turbine 2 from the side of the inlet shell and the energy flux coming to the turbine 2 from the side of the outlet section of the outer shell 8 is decreased. And the amount of the total energy flux supplied to the turbine 2 remains substantially invariable both with a rated speed of the air flow and a considerable increase in the speed of the air flow. Be it also noted that at the time of a further increase in the speed of the air flow (wind), the total area of a local resistance to the air flow coming to the outer shell 8 will increase, i.e. the rate of passage of the air flow via the outer shell 8 will be reduced further. As the speed of the air flow is further reduced up to the computed value, a back redistribution of the energy fluxes supplied to the turbine takes place, i.e. the quantity of energy supplied to the turbine 2 via the inlet shell I will be diminished and a portion of energy supplied to the turbine 2 by the ejection of the air flow, using the outer shell 8, will be increased. Thus, given the reduced speed of the air flow up to its computed value, the total area of a local resistance of the air flow will be reduced until the ellipsoidal shape of the outside surface 10 of the inlet shell I will not produce effects whatsoever on the air flow (in case of the rated speed of the air flow). As the speed of the air flow is varied, energy fluxes admitted to the turbine 2 are automatically regulated on account of their redistribution, which allows one to provide a stable speed of rotation of an output shaft of the turbine 2, regardless of changes in the environmental conditions (gusts of wind). Stability of the speed of rotation of the turbine during operation lowers a value of peak loads on the parts of an apparatus and, consequently enhances reliability and the lasting quality of operation of the apparatus as a whole.

For example, if a rated speed of wind in a particular climatic region is 6-7 m/s and a dia. D of a circle defining the inside surface 9 of the outer shell 8 in its minimum section is selected 3.0 m, then a length B of the major axis of an ellipse defining the cross section of the outside surface 10 of the inlet shell 1 at an inlet of the latter, according to the invention, should be not less than 1.65 m and not more than 2.85 m. The concrete value of B of the major axis of the ellipse defining the cross section of the outside surface 10 of the outer shell I at an inlet thereof from a certain range is selected in relation to a value of wind maximum speeds active in the given climatic region. For example, if the maximum speed of the air flow is 9.00 m/s, then B of the major axis of the ellipse defining the cross section of the outside surface 10 of the inlet shell I at an inlet of the latter should be about 1.90 m and if the maximum speed of the air flow is 14.0 m/s, then B of the major axis of the ellipse defining the cross section of the outside surface 10 of the inlet shell I at an inlet of the latter should be about 2.60 m.

## Claims

1. A wind-driven electric plant comprising an inlet shell shaped as a ring, a turbine coaxially arranged within the inlet shell, a mechanism kinematically coupled with the turbine to convert mechanical energy and a circular outer shell with a cross section of its inside surface of a round form, **characterized in that** at least a portion of the outside surface of the inlet shell is shaped in cross section as an ellipse, and the major axis of the ellipse defining the cross section of the outside surface of the inlet shell at an inlet of the latter is not less than 0.55 and not more than 0.95 of the dia. of a circle defining the inside surface of the outer shell in its minimum cross section.

2. The wind-driven electric plant according to claim 1, **characterized in that** at least a portion of the outside surface of the outer shell is defined by the lateral surface of a cylinder of revolution.

3. The wind-driven electric plant according to claim 1, **characterized in that** at least a portion of the inside surface of the inlet shell and/or outer shell is defined by the lateral surface of a cone of revolution.

4. The wind-driven electric plant according to claim 1, **characterized in that** at least a portion of the inside surface of the inlet shell and/or outer shell is defined by the lateral surface of a cylinder of revolution.
